# EUROPÄISCHE PATENTANMELDUNG

(11) **EP 2 020 540 A1**
(43) Veröffentlichungstag der Anmeldung: **04.02.2009**
(21) Anmeldenummer: 08020252.6
(22) Anmeldetag: 15.06.2001
(51) Int. Cl.: F16J 15/08

(54) **Flachdichtung und Verfahren zu ihrer Herstellung**

(30) Priorität: 15.06.2000 DE 10029403; 07.12.2000 DE 10060872
(62) Teilanmeldung aus: 06008918.2
(71) Anmelder: REINZ-Dichtungs-GmbH, 89233 Neu-Ulm (DE)
(72) Erfinder: Höhe, Kurt, 89129 Langenau (DE); Gütermann, Armin, 89340 Leipheim (DE); Unseld, Günther, 89189 Neenstetten (DE); Egloff, Georg, 89264 Weissenhorn (DE)
(74) Vertreter: Pfenning, Meinig & Partner GbR

(57) **Zusammenfassung**

Die Erfindung betrifft eine Flachdichtung mit mindestens einer metallischen Lage, in der mindestens eine Durchgangsöffnung ausgebildet ist, wobei die oder zumindest eine der metallischen Lagen (1) zumindest bereichsweise in Form einer wellen- und/oder sägezahnförmigen Profilierung (2) um die Durchgangsöffnung(en) ausgebildet ist.

## Beschreibung

Die Erfindung betrifft eine Flachdichtung mit minde-stens einer metallischen Lage, in der jeweils mindestens eine Durchgangsöffnung ausgebildet ist und ein Verfahren zu ihrer Herstellung. Die ein- oder auch mehrlagige Flachdichtung kann insbesondere als Zylinderkopfdichtung, aber auch für andere miteinander zu dichtende Flächen, wie die verschiedensten Flanschdichtungen ausgebildet und eingesetzt werden.

Zur Erhöhung und Absicherung der Dichtwirkung einer solchen metallischen Flachdichtung über einen längeren Zeitraum ist es üblich, um die verschiedensten Durchgangsöffnungen durch entsprechende Verformung mindestens einer der Lagen einer solchen Flachdichtung eine Sicke, die diese Durchgangsöffnung in der Regel vollständig umschließt, auszubilden.

Eine solche Sicke kann die Funktion jedoch nur so lange erfüllen, wie ein gewisses Maß an Elastizität im Sickenbereich erhalten bleibt, was in der Regel ohne zusätzliche Hilfsmittel, mit denen eine vollständige plastische Verformung verhindert wird, nicht eingehalten werden kann. Hierfür werden üblicherweise Verformungsbegrenzer für die Sicken eingesetzt. Solche Verformungsbegrenzer sind in den verschiedensten Ausführungsformen bekannt und werden üblicherweise auch als "Stopper" bezeichnet. So können Verformungsbegrenzer durch Umbiegen einer der metallischen Lagen oder von zusätzlichen Elementen erhalten werden.

In der DE 298 04 534 ist ein Beispiel eines solchen Verformungsbegrenzers in Form eines rillierten Bereiches, der in einer metallischen Lage ausgeformt ist, beschrieben. Eine solche Rillierung wird durch Kalt-oder Heißverformung in der metallischen Lage erzeugt. Die Rillierung ist dabei in Bezug zur Dicke der metallischen Lage bzw. auch unter Berücksichtigung bestimmter Einbaubedingungen einer solchen Dichtung, so dimensioniert, dass der rillierte Bereich eine entsprechende Dickenzunahme darstellt.

Mit einer solchen Rillierung als Verformungsbegrenzer ist jedoch nur eine begrenzte Einflußnahme auf gewünschte Eigenschaften erreichbar und insbesondere die Variation mit entsprechender Anpassung an die unterschiedlichsten Einsatzbedingungen, die auch an einer Flachdichtung lokal unterschiedlich sein können, ist nur bedingt und in eingeschränkter Form möglich.

Bei jedem der geeigneten Herstellungsverfahren tritt eine Veränderung des Metalls in diesem Bereich auf, unabhängig davon, ob eine Kalt- bzw. eine Heißverformung durchgeführt worden ist, was zumindest bei der Auswahl und Gestaltung des Flachmaterials für solche Flachdichtungen berücksichtigt werden muss.

Insbesondere bei der Ausbildung einer solchen Rillierung durch Pressen in das kalte Metall, tritt ein entsprechender Verschleiß am Presswerkzeug auf, so dass die kostenintensiven Werkzeuge in mehr oder weniger großen Abständen ausgetauscht werden müssen.

Außerdem können die Rillen nicht beliebig tief und mit beliebiger Dichte reproduzierbar in die metallische Lage eingebracht werden.

Es ist daher Aufgabe der Erfindung, eine Flachdichtung sowie ein Verfahren zu ihrer Herstellung mit mindestens einer metallischen Lage zur Verfügung zu stellen, die an lokal auftretende Einflüsse besser angepaßt und mit dem eine solche Flachdichtung kostengünstig hergestellt werden kann.

Erfindungsgemäß wird diese Aufgabe durch eine Flachdichtung nach Anspruch 1 oder ein Verfahren nach Anspruch 29 gelöst. Vorteilhafte Ausgestaltungsformen und Weiterbildungen der Erfindung ergeben sich mit den in den untergeordneten Ansprüchen enthaltenen Merkmalen.

Bei der erfindungsgemäßen Flachdichtung, die aus einer bzw. aber auch aus mehreren übereinander angeordneten metallischen Lagen bestehen kann, wird im Gegensatz zur bereits erwähnten, bekannten Rillierung, in der einen zumindest jedoch in einer der metallischen Lagen eine Profilierung zumindest bereichsweise um die eine oder auch mehrere Durchgangsöffnungen, insbesondere bei Durchgangsöffnungen für Brennräume in Zylinderkopfdichtungen, eingesetzt. Dabei kann eine solche Profilierung in Wellenform und/oder in Sägezahnform ausgebildet werden, indem diese Form in die jeweilige metallische Lage eingeprägt wird.

Der Begriff Welle bei der vorliegenden Erfindung umfaßt auch Ausführungsformen, die von einer sinusförmigen Welle abweichen. Die Welle kann demnach auch in den Bergen und Tälern abgeflacht sein und z.B. gerade Flanken aufweisen. Unter dem Begriff Welle der vorliegenden Erfindung fallen auch trapezförmige Ausgestaltungen.

Die Profilierung ist bevorzugt zumindest bereichsweise um die Durchgangsöffnung(en) herum, möglichst deren Außenkontur angepaßt, ausgebildet. Idealerweise weist eine derartige Profilierung drei und mehr Wellenberge bzw. drei und mehr Zähne auf jeder Seite der Dichtung auf. In diesem Falle wird ein gutes Dichtverhalten auch ohne Füllung oder Beschichtung der Profilierung erzielt.

Wird eine sägezahnförmige Profilierung eingeprägt, ist es zweckmäßig, die Spitzen der einzelnen Zähne, die alternierend in Richtung der beiden Dichtflächen weisen, entsprechend abzurunden. Bei einem Wellenprofil ist dies selbstverständlich nicht erforderlich. In beiden Fällen können jedoch die jeweiligen Wellenberge bzw. Wellentäler auch abgeflacht bzw. abgeplattet sein, wodurch sich eine besonders wirksame Auflagefläche des Stoppers auf die benachbarten Dichtungslagen ausbildet. Vorteilhafterweise sind die Höhen der Wellenberge bzw. der einzelnen Zähne, d.h. die Amplitude, nicht unbedingt über die gesamte Profilierung konstant, sondern können in bestimmten Umfangsbereichen um eine Durchgangsöffnung, unter Berücksichtigung der jeweiligen geometrischen Gestalt, unterschiedlich groß sein. In gleicher Weise können auch die Abstände von Wellenbergen bzw. Zähnen zueinander variiert werden.

Auch können unterschiedliche Amplituden der Zähne bzw. Wellenberge und/oder unterschiedliche Abstände zwischen den einzelnen Zähnen bzw. Wellenbergen sowie unterschiedliche Radien der Wellen, ausgehend mit wachsendem Abstand vom Rand der jeweiligen Durchgangsöffnung eingestellt werden, um insbesondere die Elastizität und die Federsteife gezielt lokal beeinflussen zu können. Dabei kann auch definiert eine plastische Verformung eines Bereiches einer solchen Profilierung zugelassen bzw. bereits vor dem Einbau einer solchen Flachdichtung vorgenommen werden.

Weiterhin kann der Übergangsbereich zwischen Wellentälern und Wellenbergen bzw. zwischen einander benachbarten, auf gegenüberliegenden Seiten liegenden Zähnen eine geringere Materialdicke als die Wellenberge/-täler bzw. Zähne aufweisen. Durch geeignete Prägung beim Herstellen der Profilierung (Flankenstauchung) läßt sich so auch die Materialdicke profilieren und die Eigenschaften der Profilierung an die jeweiligen spezifischen Bedingungen anpassen. Auch ist es möglich, nicht die Flanken zu stauchen, sondern die Berge oder Täler. Eine sogenannte Radiusstauchung führt dann zu einer Verdickung der Flanken.

Es kann bereits genügen, eine Profilierung um die Durchgangsöffnungen auszubilden, deren Periodenlänge = 1 ist. Dies bedeutet, dass die Profilierung lediglich aus zwei Wellenbergen bzw. zwei Zähnen besteht, die in jeweils entgegengesetzte Richtungen geformt sind. Selbstverständlich kann aber auch eine größere Anzahl von Wellenbergen, vorteilhafterweise drei oder mehr, eingesetzt werden.

Besonders bevorzugt ist es, wenn die Profilierung als Verformungsbegrenzer für zusätzlich ausgebildete Sicken eingesetzt wird.

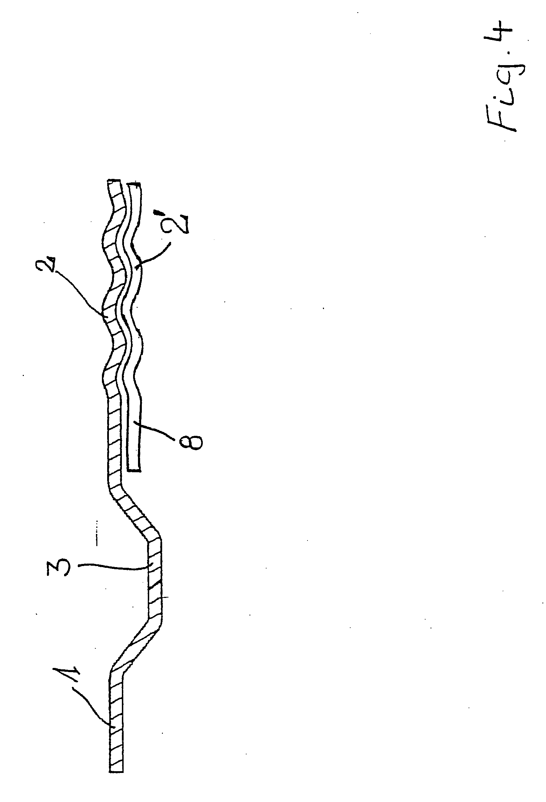

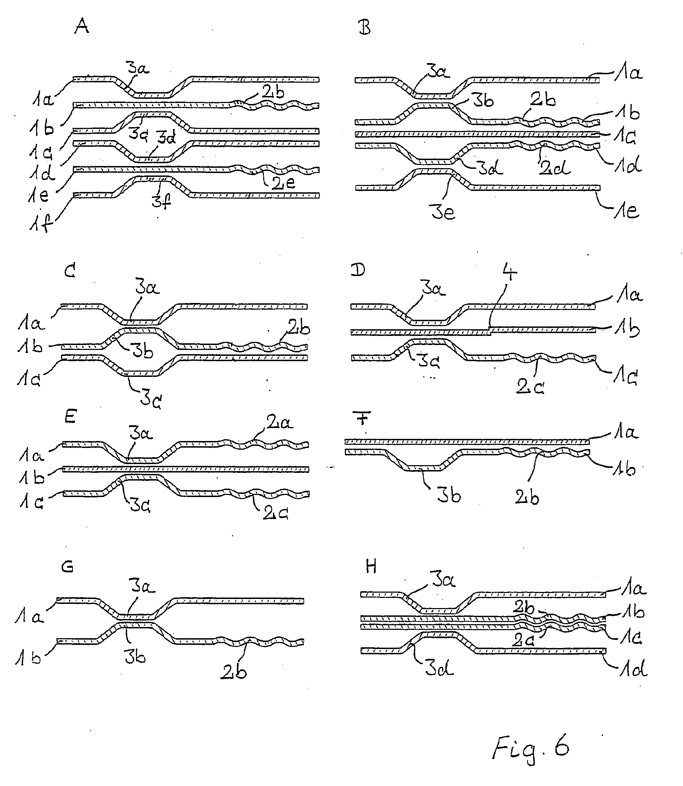

So besteht die Möglichkeit, bei einer Einlagendichtung zumindest an einer Seite einer solchen Sicke eine erfindungsgemäße Profilierung auszubilden, wobei natürlich auch die Möglichkeit einer beidseitigen Anordnung von Profilierungen gegeben ist. Bevorzugt ist die Profilierung brennraumseitig angeordnet. Für den Fall, daß die Profilierung als Verformungsbegrenzer fungiert und zu einer Sicke benachbart ist, ist die Ausbildung der Welle, d.h. die Profilhöhe (Amplitude) und der Abstand der Wellenberge ((Periode), auf die Sicke abgestimmt. Die Profilierung, d.h. insbesondere die Amplitude der Welle, muß kleiner sein als die Ausdehnung der Sicke (siehe z.B. Figuren 4 und 6).

Die Profilierung kann aber auch bei einer Mehrlagendichtung in einer Lage und die Sicke in einer benachbarten Lage ausgebildet werden.

Erfindungsgemäß kann eine Flachdichtung auch aus mindestens zwei Metallagen bestehen, die beide eine wellen- oder sägezahnförmige Profilierung aufweisen. Diese Profilierungen können übereinander zu liegen kommen. Vorteilhafterweise sind die Profilierungen in den beiden Lagen unterschiedlich ausgelegt bezüglich der Länge, der Tiefe und/oder des Radius der jeweiligen Welle (Amplitude, Profilhöhe und Radius). Werden derartig zwei unterschiedlich ausgelegte Wellensicken direkt miteinander in Berührung im Motor auf Pressung gebracht, so ist die Relativbewegung jeder der Wellensicken abhängig von der jeweiligen Wellenstruktur. Die Differenz der Relativbewegung der beiden Profilierungen kann zur Abdichtung als elastisches Federelement mit einer hohen Spannkraft verwendet werden. So kann in einem der Bleche die Vollsicke eingespart werden und dennoch die Spannkraft einer Vollsicke übertroffen werden.

Weiterhin kann die Lage, die die Profilierung aufweist, im Bereich der Profilierung durch mindestens eine weitere Lage, z.B. einen Ring, vorteilhafterweise mit der Breite der Profilierung, verstärkt sein. Diese Lage oder dieser Ring kann die profilierte Lage auch längs des Umfangsrandes der Durchgangsöffnung zumindest bereichsweise umgreifen und dort einen sogenannten Falzstopper bilden. Die Verstärkungslage bzw. der Verstärkungsring kann dieselbe Profilierung aufweisen, und folglich können beide Profilierungen formschlüssig aneinander anliegen. Auch hier kann jedoch die Amplitude, Periode und Radius der Profilierung der Verstärkungslage bzw. des Verstärkungsringes längs des Umfangsrandes und/oder senkrecht zum Umfangsrand der Durchgangsöffnung variiert werden. Unterscheiden sich Periode, Amplitude und Radius auf verschiedenen Lagen angeordneter, benachbarter Profilierung voneinander, so kann das Dichtverhalten auf diese Weise weiter gezielt beeinflußt werden.

Der Stopper (Lage oder Ring) kann mittels frei wählbarer Schweißverfahren mit dem Wellenstopper verbunden werden. Durch diesen aufgeschweißten Stopper wird ein variabler Überstand erzielt, der gleichzeitig einen elastischen Anteil enthält. Die Wahl der Dicke des zusätzlichen Stoppers ermöglicht es, die Dichtung im Stopperbereich auf die Motorgegebenheiten abzustimmen. So können sehr hohe und robuste Konstruktionen erreicht werden, beispielsweise für Dieselmotoren auch im Lastkraftwagenbereich.

Im Gegensatz zu herkömmlichen Flachdichtungen mit Verformungsbegrenzern kann auf ein Umbiegen bzw. Umbördeln von Lagen der Flachdichtung oder zusätzlichen Elementen zur Herstellung von Verformungsbegrenzern verzichtet werden und demzufolge die Herstellungskosten reduziert werden.

In einer bevorzugten Ausführungsform kann eine ausreichende und dauerhafte Dichtwirkung einer erfindungsgemäßen Flachdichtung mit entsprechender Profilierung auch erreicht werden, wenn auf die die Durchgangsöffnungen umschließenden Sicken verzichtet worden ist. In diesem Fall wird die gesamte Funktion, die vorab von Sicke mit Verformungsbegrenzer erfüllt worden ist, allein mittels der Profilierung erreicht.

Hierzu kann die Profilierung einer oder mehrerer Lagen durch entsprechende Gestaltung und Dimensionierung nahezu optimiert werden, indem die Elastizität, die Federsteife und auch ein gezielt gewünschtes Maß an plastischer Verformung in den unterschiedlichen Bereichen einer solchen Profilierung eingestellt werden können. So ist es möglich, wie bereits eingangs angedeutet, die Abstände der einzelnen Wellenberge bzw. Zähne voneinander und/oder deren Höhen und/oder die Radien der einzelnen Wellen entsprechend zu variieren. Es kann beispielsweise auch der in Richtung auf eine Durchgangsöffnung weisende Bereich einer Profilierung kleinere Abstände der Wellenberge bzw. Zähne voneinander aufweisen, als die weiter entfernten Bereiche. In dem erstgenannten Bereich ist demzufolge die Elastizität kleiner als in den verdichteten Bereichen einer solchen Profilierung. Die Abstände und/oder Höhen können aber auch, ausgehend vom äußeren Rand einer Durchgangsöffnung sukzessive vergrößert sein.

Die verdichteten Bereiche einer Profilierung weisen eine geringere Elastizität auf und sind im Gegensatz dazu begrenzt plastisch verformbar und dieser Bereich kann dementsprechend gegebenenfalls die Funktion eines Verformungsbegrenzers mit übernehmen.

Weiterhin kann auch längs des Umfangs der Durchgangsöffnung, beispielsweise einer Zylinderbohrung, eine Variation der Zahl der Wellenberge bzw. Täler bzw. Zähne, der Blechdicke, der Höhen oder Form, insbesondere der Radien der Wellenberge/-täler bzw. Zähne sowie deren Abstand und dergleichen erfolgen.

Die Metalllagen, in der die Profilierung eingebracht ist, kann auch bezüglich ihrer Ober- und Unterseite, d.h. der beiden Seiten, die in eingebautem Zustand beispielsweise den Zylinderkopf bzw. den Zylinderblock zugewandt sind, unterschiedlich gestaltet werden, z.B. bzgl. der Höhe und Form der Wellenberge/- täler und dergleichen, so daß der Stopper den unterschiedlichen Eigenschaften von beispielsweise Zylinderkopf und Zylinderblock, die aus unterschiedlichen Materialien gefertigt sein können, gerecht werden kann.

Die Lage, die die Profilierung aufweist, kann weiterhin aus kaltverformbarem Stahl geformt werden, beispielsweise einem Martensit-aushärtenden Stahl wie Zapp VACL 180T, der durch Temperierung, beispielsweise auf 300 °C, aushärtet.

Die Steifigkeit bestimmter Bereiche einer Profilierung kann auch mittels Stegen, die zwischen den einzelnen benachbarten Wellenbergen bzw. Zähnen angeordnet und ausgebildet sind, erhöht werden. Solche Stege können in einer Reihen-, aber auch in versetzter Anordnung eingesetzt werden. Die Stege können aber auch lediglich in einem Bereich, der in einem größeren Abstand von der jeweiligen Durchgangsöffnung angeordnet ist, vorhanden sein.

Die erfindungsgemäß einzusetzende Profilierung kann in den verschiedensten metallischen Materialien, also auch in verschiedenen Federstahlmaterialien ausgebildet werden, wobei mit Federstahl eine noch höhere Elastizität und demzufolge eine Verbesserung der Dichtwirkung über einen langen Zeitraum erreicht werden kann.

Die erfindungsgemäße Flachdichtung kann zusätzlich weitergebildet werden, indem an sich bekannte Stoffe auf zumindest eine Seite einer metallischen Lage aufgebracht werden. Geeignete Stoffe, beispielsweise Elastomere, sind beispielsweise in DE 198 29 058, DE 199 28 580 und DE 199 28 601 genannt, auf deren Offenbarungsgehalt vollumfänglich zurückgegriffen wird.

Ein solcher Füllstoff ist dann zumindest auch in Bereichen und Teilen der Profilierung vorhanden und die Elastizität und Federsteifigkeit kann mit Hilfe des jeweiligen Elastomers beeinflußt werden. Eine weitere Einflußgröße, bei Verwendung solcher Füllstoffe, ist neben deren Anordnung auch der jeweilige Füllgrad in der Profilierung. Dies bedeutet, dass die Wellentäler einer solchen Profilierung bzw. die Zwischenräume zwischen den Zähnen einer sägezahnförmigen Profilierung vollständig, aber auch teilweise gefüllt sein können, so dass neben der bereits erwähnten lokalen Einflußnahme auf Elastizität und Federsteifigkeit auch die Dämpfungseigenschaften in unterschiedlicher Form beeinflußbar sind.

Der Füllgrad kann mit wachsendem Abstand vom Rand der Durchgangsöffnungen verändert werden. Er kann aber auch über den Umfang der jeweiligen Durchgangsöffnungen variiert werden.

Die erfindungsgemäßen Flachdichtungen können unabhängig davon, ob sie ein- oder mehrlagig, mit oder ohne zusätzlichen Füllstoff hergestellt werden sollen, mit wenigen technologisch, einfach beherrschbaren Arbeitsschritten und demzufolge besonders kostengünstig hergestellt werden.

Durch die unterschiedlichsten Möglichkeiten auf die Gestaltung und Dimensionierung der Profilierung, können Eigenschaften lokal gezielt eingestellt werden.

Es besteht auch die Möglichkeit, eine Kombination von Wellen- und Sägezahnform innerhalb einer Profilierung einzusetzen.

Nicht zuletzt soll darauf aufmerksam gemacht werden, dass bei einer sägezahnförmigen Profilierung die entsprechend ausgebildete Lage im Querschnitt entsprechend gebogen ist und die einzelnen Zähne nicht, wie dies bei der im Stand der Technik bekannten Rillierung der Fall ist, in das Metallmaterial eingeprägt sind. Dies trifft natürlich sinngemäß auch auf eine wellenförmige Profilierung zu.

Bei den erfindungsgemäßen Flachdichtungen tritt kein lokales Aufhärten im Metall auf. Außerdem ist ein verringerter Verzug erreichbar. Die Profilierungen können auch bei harten Federstählen ausgebildet werden.

Nachfolgend soll die Erfindung anhand von Ausführungsbeispielen näher erläutert werden.

Dabei zeigen:
- Figur 1: eine Schnittdarstellung, durch einen Teil einer erfindungsgemäßen Flachdichtung, bei der eine wellenförmige Profilierung, einen Verformungsbegrenzer für eine herkömmliche Sicke bildet;
- Figur 2: einen Teil einer Dreilagenflachdichtung, mit zwei außenliegenden gesickten Lagen und
- Figur 3: einen Teil eines weiteren Beispiels einer erfindungsgemäßen Flachdichtung, mit variabel gestalteter Profilierung;
- Figur 4: ein weiteres Beispiel einer erfindungsgemä- ßen Flachdichtung;
- Figur 5: vier weitere Beispiele erfindungsgemäßer einlagiger Flachdichtungen;
- Figur 6: insgesamt acht weitere Beispiele für erfindungsgemäße Flachdichtungen;
- Figur 7: vier weitere Beispiele erfindungsgemäßer Flachdichtungen;
- Figur 8: eine Ausführungsform, bei der die Profilierung als Trapez ausgebildet ist, und
- Figur 9: eine Ausführungsform, bei der die Profilierung als radiusgestauchte Sicke ausgebildet ist.

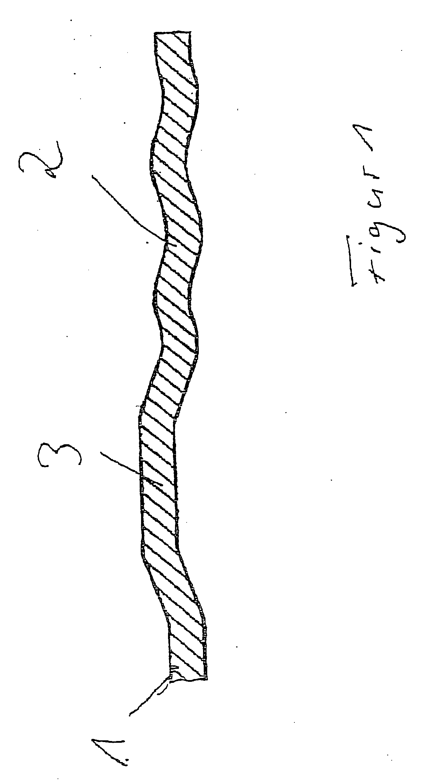

Bei dem in Figur 1 gezeigten Beispiel einer erfindungsgemäßen einlagigen Flachdichtung, ist in der metallischen Lage 1 eine Sicke 3 ausgeformt und in Richtung auf eine hier nicht dargestellte Durchgangsöffnung schließt sich eine wellenförmige Profilierung 2 an, deren Wellenberge und Wellentäler regelmäßig angeordnet und demzufolge auch die Wellenberge eine konstante Profilhöhe und konstante Abstände zueinander aufweisen. Die Profilierung 2 erfüllt in diesem Fall neben der Funktion eines Verformungsbegrenzers für die Sicke 3 auch zusätzlich durch die erreichbaren elastischen Eigenschaften Abdichtfunktion.

Hier wie bei der Beschreibung der folgenden Figuren werden für entsprechende Elemente entsprechende Bezugszeichen verwendet.

In nicht dargestellter Form kann die Federcharakteristik und demzufolge auch die Elastizität durch Ausfüllen der Zwischenräume zwischen den benachbarten Wellenbergen der Profilierung 2, z.B. mit Elastomer und mit unterschiedlichem Füllgrad beeinflußt werden. Selbstverständlich können auch die Zwischenräume zwischen den Wellenbergen vollständig mit einem Elastomer ausgefüllt sein.

In nicht dargestellter Form kann eine entsprechende Profilierung 2 auch auf der anderen Seite der Sicke 3 ausgebildet sein.

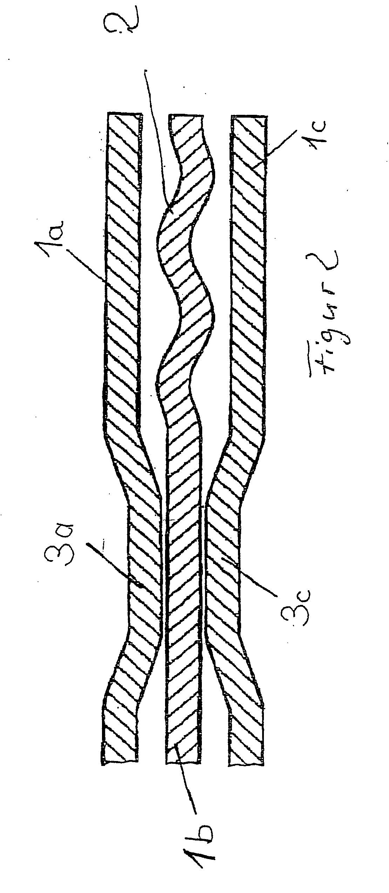

In Figur 2 ist eine dreilagige Flachdichtung gezeigt. Bei diesem Beispiel sind in den beiden außen liegenden Lagen 1' der Flachdichtung wieder Sicken 3 ausgeformt und eine ebenfalls wellenförmige Profilierung 2 ist entsprechend in der mittleren Lage 1 vorhanden. Selbstverständlich treffen die Aussagen zu Möglichkeiten der Beeinflussung von Eigenschaften, die bereits zu Figur 1 gemacht worden sind, auch auf dieses Beispiel sinngemäß zu.

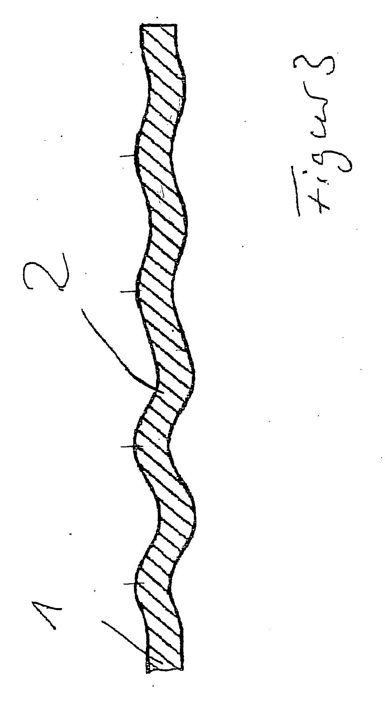

In der Figur 3 ist wiederum eine einlagige Metallflachdichtung gezeigt, wobei bei diesem Beispiel auf die Ausbildung einer zusätzlichen Sicke 3 verzichtet worden ist. Die Sickenfunktion kann bei diesem Beispiel auch von der entsprechend ausgebildeten Profilierung 2 erfüllt werden. Dabei sind die Abstände und Profilhöhen der einzelnen Wellenberge der Profilierung 2, ausgehend aus Richtung des hier nicht gezeigten Randes einer Durchgangsöffnung kleiner, als dies in den Bereichen der Profilierung 2 mit größerem Abstand zur Durchgangsöffnung der Fall ist. Die entsprechend näher liegenden Bereiche sind steifer und können, wenn überhaupt, nur geringfügig plastisch verformt werden.

Der Bereich, der weiter von der Durchgangsöffnung entfernt ist, weist eine größere Periodenlänge auf, die Abstände der Wellenberge voneinander sind entsprechend größer, wobei letzteres auch auf die Profilhöhe der Wellenberge in diesem Bereich zutrifft. Demzufolge ist in diesem Bereich der Profilierung 2 eine höhere Elastizität und geringere Steifigkeit vorhanden. Im eingebauten, d.h. vorgespannten Zustand einer solchen Flachdichtung kann dann der Bereich der Profilierung 2 mit dem größeren Abstand von der Durchgangsöffnung durch die erwähnten Eigenschaften Verformungsbegrenzerfunktion für den davor liegenden Bereich der Profilierung 2 erfüllen.

Die Profilierung in ihrer Gestalt durch Verwendung eines entsprechend gestalteten und dimensionierten Prägewerkzeuges bereits bei der Ausformung erhalten werden. Es besteht aber die Möglichkeit, eine solche Gestaltung dieses Bereiches in einem zweiten technologischen Arbeitsschritt durch entsprechendes Stauchen und Drücken herzustellen.

Vorteilhaft ist es, wenn die vorab erhaltene Profilierung 2 nachfolgend vollständig oder bereichsweise planiert wird, so dass im planierten Bereich die Profilhöhe wieder reduziert wird. Hierzu können ein oder zwei Stempel mit einer ebenen parallel oder in einem Winkel schräg zur Oberfläche der metallischen Lage 1 ausgerichteten Pressflächen auf den zu planierenden Bereich gepresst werden. Beim Planieren sollte die metallische Lage 1, insbesondere an den Rändern der Profilierung 2 verspannt werden. Durch das nachfolgend durchgeführte Planieren kann die Steifigkeit und die Härte der Profilierung 2 erhöht und demzufolge auch die Standfestigkeit einer erfindungsgemäßen Flachdichtung verbessert werden.

Da bei den in den Figuren 1 bis 3 gezeigten Beispielen von erfindungsgemäßen Flachdichtungen durch die Wahl von Schnittdarstellungen darstellerische Grenzen gesetzt sind, soll darauf hingewiesen werden, dass die Profilierung über den Umfang gesehen, d.h. in verschiedenen radialen Achsen, unterschiedlich gestaltet und dimensioniert sein kann. So besteht die Möglichkeit, die Anzahl der hintereinander angeordneten Wellenberge bzw. Zähne über den Umfang zu variieren und/oder eine entsprechende Veränderung der Abstände und Profilhöhen der Profilierung vorzunehmen.

Figur 4 zeigt ein weiteres Beispiel einer einlagigen Flachdichtung mit einer einzelnen Metalllage 1, in die eine Sicke 3 eingeprägt ist. Zwischen der Sicke 3 und der rechter Hand liegenden Durchgangsöffnung ist ein wellenförmiger Stopperbereich 2 angeordnet. Dieser weist insgesamt drei Wellenberge und drei Wellentäler auf. Unterhalb dieses Stopperbereiches ist längs des Umfangsrandes der Durchgangsöffnung ein Ring 8 aufgeschweißt, der dieselbe Profilierung wie die Metalllage 1 aufweist und an dieser formschlüssig anliegt. In dem Ring 8 ist folglich ebenfalls eine Profilierung 2' mit drei Wellenbergen und drei Wellentälern ausgebildet. Mit einem derartigen zusätzlichen Stopperring 8 kann die erfindungsgemäße Flachdichtung an variable Motorgeometrien bzw. Motorverhältnisse angepaßt werden, in denen sowohl die Breite wie die Materialdicke des Metallringes 8 dementsprechend gewählt werden.

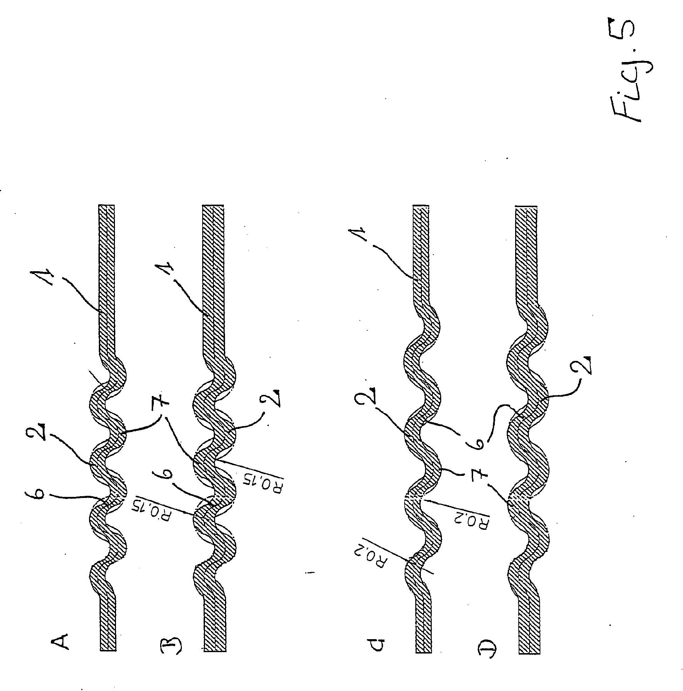

Figur 5 zeigt Ausschnitte aus vier weiteren Flachdichtungen aus jeweils einer einzigen Lage. Diese einzelne Lage kann ebenso Bestandteil einer Mehrlagendichtung sein. Die gezeigten Flachdichtungen in Figur 5A und 5C besitzen dieselbe Materialstärke, während die in den Figuren 5B und 5D gezeigten Flachdichtungen eine größere Lagendicke aufweisen. Demgegenüber besitzen die Wellen in dem Stopperbereich 2 in den Figuren 5A und 5B einen kleineren Krümmungsradius als bei den Flachdichtungen in Figuren 5C und 5D. Hier ist folglich gezeigt, daß mittels unterschiedlicher Materialdicke der Lage als auch mittels unterschiedlicher Ausformung der profilierten Bereiche 2 der Lage 1 ein großer Spielraum für Anpassungsmöglichkeiten dieses Stoppers 2 an verschiedene Motorcharakteristika gegeben sind.

Weiterhin ist bei sämtlichen in Figur 5 dargestellten profilierten Bereichen 2 jeweils die Materialstärke in einem Zwischenbereich 6 zwischen einem Wellenberg 7 und einem benachbarten Wellental 7 geringer als im Bereich der Wellentäler bzw. Wellenberge 7. Auch hierdurch kann das elastische Verhalten der Stopperbereiche 2 variiert werden.

Figur 6 zeigt insgesamt acht verschiedene Varianten erfindungsgemäßer Flachdichtungen. Figur 6A zeigt eine insgesamt sechslagige Flachdichtung aus sechs Metallagen 1a bis 1f. In der Lage 1b und der Lage 1e sind jeweils zwei erfindungsgemäße profilierte Stopperbereiche 2b bzw. 2e ausgebildet, die als Verformungsbegrenzer für die in den Lagen 1a, 1c, 1d und 1f ausgebildeten Sicken 3a, 3c, 3d bzw. 3f.

In Figur 6B ist eine entsprechende fünflagige Dichtung dargestellt, bei der wiederum zwei Lagen mit profilierten Stopperbereichen versehen sind. In diesem Falle ist zwischen die beiden oberen Lagen 1a und 1b und die beiden unteren Lagen 1d und 1e eine Zwischenlage 1c eingefügt, die weder eine Sicke aufweist noch profiliert ist.

In Figuren 6C bis 6E sind dreilagige Flachdichtungen dargestellt, wobei in Figur 6D die Zwischenlage 1b eine Stufe 4 aufweist. Der Stufe 4 auf einer Seite benachbart ist ein profilierter Stopperbereich 2c, der als Stopper für die Sicke 3c fungiert. Dadurch daß in der Lage 1b ein Versatz vorgesehen ist, der dem Stopperbereich 2c abgewandt ist, wird die elastische Stopperfunktion des profilierten Bereiches 2c über die im profilierten der Lage 1c versetzte Lage 1b auch für die Sicke 3a in der Lage 1a genutzt. Figuren 6F und 6G zeigen zweilagige Flachdichtungen, bei denen in je einer der Dichtungslagen ein profilierter Bereich 2b ausgebildet ist. Dieser dient als Stopper (Verformungsbegrenzer) für die Sicken 3b in Figur 6F bzw. die Sicken 3a und 3b in Figur 6G.

Figur 6H zeigt wiederum eine vierlagige Flachdichtung, wobei in den beiden äußeren Lagen 1a und 1d je eine einander zugewandte Sicke 3a und 3d ausgebildet ist. Diese beiden äußeren Lagen 1a und 1d schließen zwei weitere Lagen 1b und 1c ein, die keine Sicke aufweisen. Sie besitzen jedoch seitlich benachbart zu den Sicken 3a und 3d gewählte Bereiche 2b und 2c, die dieselbe Profilierung aufweisen und formschlüssig aneinander liegen. Diese beiden Lagen 1b und 1c bilden durch die parallel verlaufenden profilierten Bereiche 2b und 2c in dem profilierten Bereich einen Stopper (Verformungsbegrenzer) für die Sicken 3a und 3d. Durch diese Anordnung zweier paralleler profilierter Bereiche kann die Dichtwirkung und die Verformungsbegrenzung an die jeweiligen Gegebenheiten des abzudichtenden Motors angepaßt werden.

Werden alternativ in der Dichtung gemäß Fig. 6H für die beiden Lagen 1b und 1c im Bereich der wellenförmigen Profilierungen 2b und 2c unterschiedliche Längen, Tiefen und/oder ein unterschiedlicher Radius der Wellen in den beiden Profilierungen verwendet, so ist die gestreckte Länge der beiden Profilierungen bei Verpressung im Motor für die beiden Lagen 1b und 1c unterschiedlich. Diese Differenz der Relativbewegung führt zu schmalen, ringförmigen Berührungen zwischen diesen beiden Profilierungen 2b und 2c. Eine derartige Anordnung kann zur Abdichtung als elastisches Federelement mit einer hohen Spannkraft, die die Spannkraft einer Vollsicke übertreffen kann, verwendet werden. In diesem Falle kann auch eine rein zweilagige Dichtung eingesetzt werden, wobei von den vier Dichtungslagen in Fig. 6H lediglich die beiden Dichtungslagen 1b und 1c zusammen die Dichtung bilden.

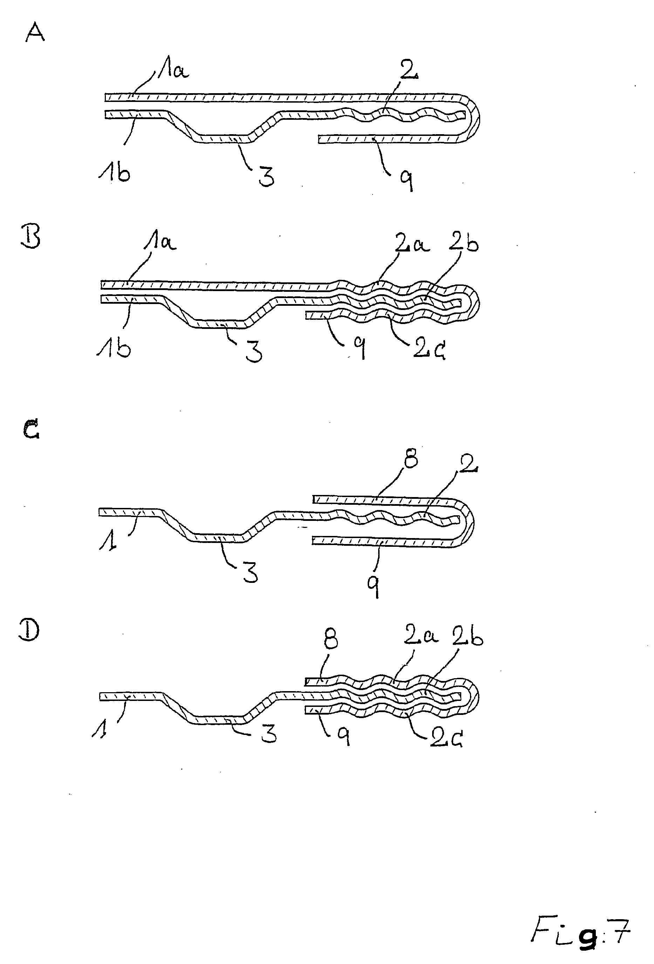

Figur 7 zeigt hier weitere Beispiele für erfindungsgemäße Flachdichtungen. Fig. 7A zeigt dabei eine Flachdichtung, die zwei metallische Lagen 1a, 1b aufweist. Die Lage 1b ist mit einer Sicke 3 versehen, an die sich unmittelbar zu der Durchführungsöffnung benachbart ein profilierter Bereich 2 anschließt. Die der Lage 1b benachbarte Lage 1a ist nicht profiliert, umgreift jedoch die Lage 1b längs des Umfangsrandes der Durchführungsöffnung und bildet so auf der entgegengesetzten Lage 1b einen Stopperring 9 aus. Damit ergibt sich die verformungsbegrenzende Stopperwirkung aus dem Zusammenwirken der Profilierung 2 mit dem Stopper 9.

In Fig. 7B ist eine entsprechende zweilagige Flachdichtung wie in Fig. 7A dargestellt. Die dem profilierten Bereich, hier mit 2B bezeichnet, der Lage 1b unmittelbar benachbarten Bereiche der Lage 1A sind in gleicher Weise mit einer Profilierung 2a bzw. 2c versehen, so daß die Lage 1a beidseitig an den profilierten Bereich 2B der Lage 1b formschlüssig anliegt.

Fig. 7C zeigt eine Anordnung wie in Fig. 7A, wobei jedoch die Lage 1a nicht als ganzflächige metallische Lage, sondern als Stopperring 8 lediglich im Bereich der Profilierung 2 der metallischen Lage 1 vorgesehen ist. Wiederum umgreift der Stopper 8 die Lage 1 längs des Umfangsrandes der Durchführungsöffnung und bildet einen zweiten Stopper 9 aus. Es handelt sich folglich um einen gefalzten Stopper.

In Fig. 7D ist in entsprechender Weise zu Fig. 7C ein gefalzter Stopperring 8, 9 dargestellt, wobei jedoch die der Profilierung, hier mit 2B bezeichnet, der Lage 1 unmittelbar benachbarten Bereiche 2A bzw. 2C des Stopper 8, 9 ebenfalls in gleicher Weise wie die Lage 1 im Profilierungsbereich 2b profiliert sind und so formschlüssig beidseitig an die Profilierung 2b anliegen. Auch hier handelt es sich folglich um einen profilierten gefalzten Stopper.

In weiteren Beispielen kann nicht nur innerhalb der Profilierung 2b sowohl die Amplitude als auch der Abstand der einzelnen Wellenberge variiert werden, entweder längs des Umfangsrandes der Durchgangsöffnung oder auch in senkrechter Richtung zum Umfangsrand der Durchgangsöffnung, sondern auch die profilierten Bereiche 2A und 2C können.in gleicher Weise eine Profilierung mit unterschiedlichen Amplituden und Wellenabständen aufweisen. Insbesondere Wellenberge zwischen den einzelnen Lagen an benachbarten Stellen voneinander abweichen. So können die Profilierung 2a und 2c in den Fig. 7B und 7D an jeweils zu der Profilierung 2b benachbarten Punkten von dieser verschiedene Wellenberghöhen bzw. Wellenbergabstände aufweisen. Durch entsprechende Wahl der Amplituden und Perioden der Profilierung in den einzelnen Lagen und Stopperringen ist eine gezielte Beeinflussung der Verformungsbegrenzung und der elastischen Eigenschaften der Flachdichtung unmittelbar benachbart zu der Durchgangsöffnung möglich.

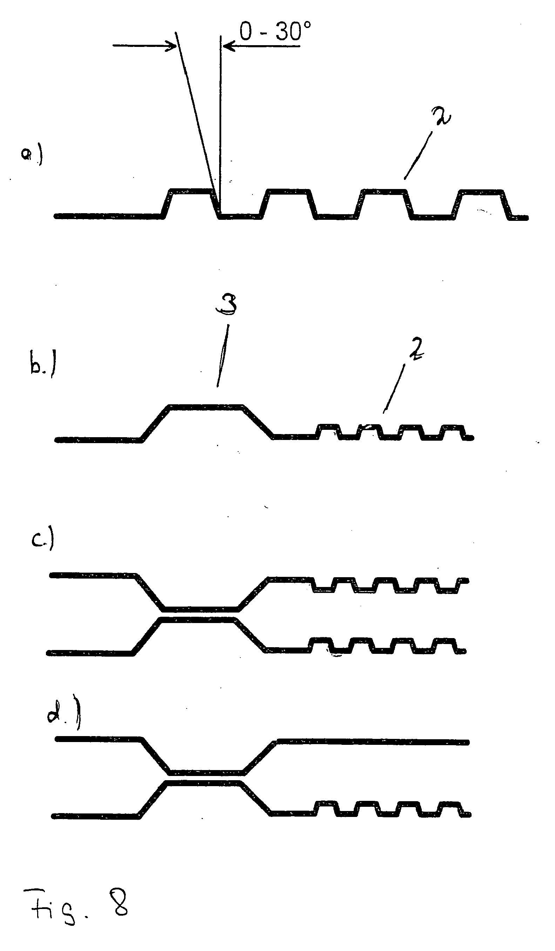

In Figur 8 ist nun eine Ausführungsform gezeigt, bei der die Profilierung 2 in Form eines Trapezes ausgebildet ist. Das Trapez besteht danach aus gleichförmigen Trapezen, die in Reihe angeordnet sind. Bei der Ausführungsform der Figur 8a ist ein Flankenwinkel vorgesehen, der zwischen 0 und 30 Grad liegen kann. Figur 8b zeigt eine weitere Ausführungsform, bei der die trapezförmige Profilierung 2 einer Sicke 3 benachbart ist. Wesentlich bei den Ausführungsformen nach den Figuren 8b und 8c und 8d ist, daß sich die Profilierung 2 in ihrer Amplitude, d.h. in der Profilhöhe, und der Abstand der Wellenberge zueinander (Periode) deutlich von der Profilierung der Sicke 3 unterscheiden. Die Profilhöhe der Profilierung ist danach die Hälfte oder weniger als die der Sicke 3.

Die Ausführungsform der Figuren 8b und 8d sind in bezug auf die Profilierung 2 und die Sicke 3 vergleichbar ausgestaltet. Die Figur 8c zeigt eine Zweilagenvariante, wobei jede der beiden Lagen eine identische Profilierung aufweist. Dagegen ist auch eine Ausführungsform möglich, bei der nur eine der beiden aktiven Lagen - wie hier in 8d die untere Lage - die Profilierung gemäß der Erfindung zeigt.

Welche der entsprechenden Ausgestaltungen gewählt werden, hängt vom jeweiligen Einsatzzweck, d.h. von den Gegebenheiten ab, für die die Dichtung vorgesehen ist.

Ein besonderer Vorteil der erfindungsgemäßen Ausführungsformen nach der Figur 8 ist darin zu sehen, daß durch die Abflachung der Wellenberge und Wellentäler, d.h. durch die Ausbildung eines Trapezes für die Profilierung bessere Dichtverhältnisse erreicht werden, die offensichtlich darauf zurückzuführen sind, daß diese Ausführungsform zu deutlich verminderten Eingrabungen kopf- und/oder blockseitig am Zylinder führt.

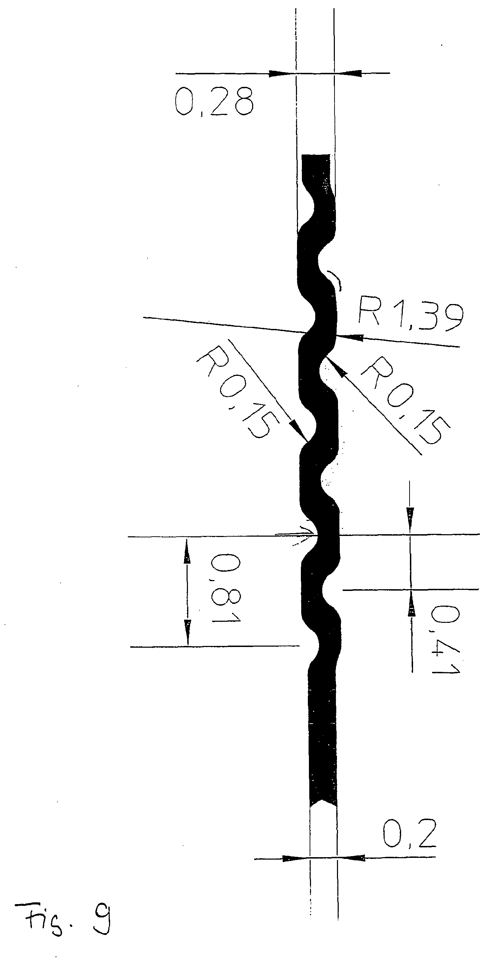

Figur 9 zeigt eine weitere Ausführungsform für die Profilierung 2. Bei der Ausführungsform nach Figur 9 ist nur die Profilierung gezeigt. Diese Profilierung 2 kann wiederum, wie auch in Figuren 8a bis 8d gezeigt, z.B. zu einer Sicke benachbart angeordnet sein und in ein, zwei oder drei Lagenkonzepten angeordnet werden.

Der Vorteil der Ausführungsform nach der Figur 9 ist darin zu sehen, daß hier eine radiusgestauchte Wellensicke eingesetzt wird, d.h. eine Profilierung, bei der die Welle in den Bergen und Tälern gestaucht worden ist, so daß es an den Flanken zu einer Materialverstärkung kommt. Diese Ausführungsform zeichnet sich durch ein besonders gutes Verhalten in bezug auf die Eingrabungen am Zylinder block- und/oder kopfseitig aus. Der Vorteil dieser Variante ist auch noch darin zu sehen, daß durch den Grad der Stauchung das elastische Verhalten nochmals gezielt eingestellt werden kann. Je nachdem, ob die Materialverdickung in den Flanken in bezug auf die Ausführungsform nach Figur 8 mehr oder weniger verstärkt wird, führt dies zu einer Änderung des elastischen Verhaltens. In Figur 9 ist zur Verdeutlichung der plastischen Verformung eine entsprechende Bemessung angegeben.

Die Ausführungsform nach Figur 9 hat sich als besonders bevorzugt erwiesen.

## Patentansprüche

1. Flachdichtung mit mindestens einer metallischen Lage, in der mindestens eine Durchgangsöffnung ausgebildet ist,
**dadurch gekennzeichnet,**
**dass** die oder zumindest eine der metallischen Lagen (1) zumindest bereichsweise in Form einer wellen- und/oder sägezahnförmigen Profilierung (2) um die Durchgangsöffnung(en) ausgebildet ist.

2. Flachdichtung nach Anspruch 1,
**dadurch gekennzeichnet, dass** die Profilierung (2) mit mindestens einer Periode in der/den metallischen Lage(n) (1) ausgebildet ist.

3. Flachdichtung nach Anspruch 1 oder 2,
**dadurch gekennzeichnet, dass** in der metallischen Lage (1), in der die Profilierung (2) ausgebildet ist, benachbart zu der Profilierung eine Sicke (3) um die Durchgangsöffnung(en) ausgebildet ist und die zumindest an einer Seite benachbart zur Sicke (3) angeordnete Profilierung (2) einen Verformungsbegrenzer für die Sicke (3) bildet.

4. Flachdichtung nach einem der vorhergehenden Ansprüche,
**dadurch gekennzeichnet, daß** in einer weiteren metallischen Lage zumindest bereichsweise eine weitere wellen- und/oder sägezahnförmige Profilierung um die Durchgangsöffnung ausgebildet ist, wobei beide Profilierungen zumindest bereichsweise unmittelbar aufeinanderliegend angeordnet sind.

5. Flachdichtung nach dem vorhergehenden Anspruch,
**dadurch gekennzeichnet, daß** die beiden Profilierungen unterschiedliche Abstände der Wellenberge bzw. Zähne, unterschiedliche Profilhöhe (Amplitude) und/oder unterschiedliche Krümmungsradien der Wellen aufweisen.

6. Flachdichtung nach einem der vorhergehenden Ansprüche, **dadurch gekennzeichnet, dass** in einer weiteren metallischen Lage (1') mindestens eine Sicke (3) um die Durchgangsöffnung(en) ausgebildet ist und die in der benachbarten metallischen Lage (1) zumindest an einer Seite in Lagenebene benachbart zur Sicke angeordnete Profilierung (2) einen Verformungsbegrenzer für die Sicke (3) bildet.

7. Flachdichtung nach einem der vorhergehenden Ansprüche,
**dadurch gekennzeichnet, daß** der Lage, in der die Profilierung ausgebildet ist, eine weitere Lage benachbart ist, die in entsprechender Weise mit gleicher oder von dieser verschiedener Profilhöhe (Amplitude) und/oder Abstand der Wellenberge oder Zähne (Periode) profiliert ist.

8. Flachdichtung nach einem der vorhergehenden Ansprüche,
**dadurch gekennzeichnet, daß** an der Lage, in der die Profilierung ausgebildet ist, im Bereich der Profilierung zumindest teilweise längs des Umfangs der Durchgangsöffnung zumindest bereichsweise ein Metallring als Stopper angeordnet ist.

9. Flachdichtung nach dem vorhergehenden Anspruch,
**dadurch gekennzeichnet, daß** der Metallring längs der Durchgangsöffnung um die metallische Lage mit Profilierung umgefalzt ist und einen bezüglich der Lage oberen und unteren Stopper bildet.

10. Flachdichtung nach einem der beiden vorhergehenden Ansprüche,
**dadurch gekennzeichnet, daß** der Metallring auf einer oder beiden Seiten der metallischen Lage in entsprechender Weise mit gleicher oder von dieser verschiedener Profilhöhe (Amplitude) und/oder Abstand der Wellenberge oder Zähne (Periode) profiliert ist.

11. Flachdichtung nach einem der vorhergehenden Ansprüche,
**dadurch gekennzeichnet, dass** die Profilhöhe (Amplitude) und/oder die Abstände der Wellenberge oder Zähne innerhalb der Profilierung (2) unterschiedlich sind.

12. Flachdichtung nach einem der vorhergehenden Ansprüche,
**dadurch gekennzeichnet, daß** die Wellenberge und/oder -täler abgeflacht sind.

13. Flachdichtung nach Anspruch 12,
**dadurch gekennzeichnet, daß** die Profilierung trapezförmig ist.

14. Flachdichtung nach einem der vorhergehenden Ansprüche,
**dadurch gekennzeichnet, dass** die Profilierung (2) *der Welle* bereichs- und/oder teilweise plastisch verformt ist.

15. Flachdichtung nach einem der vorhergehenden Ansprüche,
**dadurch gekennzeichnet, daß** die Profilierung in Form einer Welle im Bereich der Flanke gestaucht ist, so daß im Vergleich zu den Wellenbergen und/oder -tälern eine Verjüngung vorhanden ist.

16. Flachdichtung nach einem der vorhergehenden Ansprüche,
**dadurch gekennzeichnet, daß** die Profilierung in Form einer Welle im Bereich der Berge und/oder Täler gestaucht ist, so daß im Vergleich zur Flanke eine Verjüngung vorhanden ist.

17. Flachdichtung nach einem der vorhergehenden Ansprüche,
**dadurch gekennzeichnet, dass** innerhalb der Profilierung (2) zumindest teil- und/oder bereichsweise ein Füllmaterial, beispielsweise ein Elastomer, enthalten ist.

18. Flachdichtung nach dem vorhergehenden Anspruch,
**dadurch gekennzeichnet, dass** der Füllgrad der Profilierung mit Füllstoff innerhalb der Profilierung (2) unterschiedlich groß ist.

19. Flachdichtung nach einem der beiden vorhergehenden Ansprüche,
**dadurch gekennzeichnet, dass** der Füllgrad der Profilierung mit Füllstoff innerhalb der Profilierung (2) über den Umfang unterschiedlich groß ist.

20. Flachdichtung nach einem der Ansprüche 11 bis 19,
**dadurch gekennzeichnet, dass** der Füllgrad der Profilierung mit Füllstoff innerhalb der Profilierung (2) um die Durchgangsöffnung, von innen nach außen, unterschiedlich groß ist.

21. Flachdichtung nach einem der vorhergehenden Ansprüche,
**dadurch gekennzeichnet, dass** die Anzahl der Wellen oder Zähne in unterschiedlichen Umfangsbereichen um eine Durchgangsöffnung unterschiedlich groß ist.

22. Flachdichtung nach einem der vorhergehenden Ansprüche,
**dadurch gekennzeichnet, dass** die Profilhöhen und/oder die Abstände der Wellenberge oder Zähne der Profilierung (2) in verschiedenen Umfangsbereichen um eine Durchgangsöffnung unterschiedlich groß sind.

23. Flachdichtung nach einem der vorhergehenden Ansprüche,
**dadurch gekennzeichnet, dass** zumindest die Lage (1) in der die Profilierung ausgebildet ist, aus einem Federstahl besteht.

24. Flachdichtung nach einem der vorhergehenden Ansprüche,
**dadurch gekennzeichnet, daß** zumindest die Lage, in der die Profilierung ausgebildet ist, aus einem kaltverformbaren, bei Temperierung aushärtenden Stahl besteht.

25. Flachdichtung nach einem der vorhergehenden Ansprüche,
**dadurch gekennzeichnet, dass** zwischen Zähnen oder in Wellentälern der Profilierung Stege vorhanden sind.

26. Flachdichtung nach einem der vorhergehenden Ansprüche,
**dadurch gekennzeichnet, daß** die Wellenberge und Wellentäler bzw. Zähne abgeflacht und/oder abgeplattet sind.

27. Flachdichtung nach einem der vorhergehenden Ansprüche,
**dadurch gekennzeichnet, daß** der Bereich zwischen benachbarten Wellenbergen und Wellentälern bzw. zwischen einander benachbarten, auf verschiedenen Seiten der Lage angeordneten Zähnen eine geringere Materialdicke aufweist als die Wellenberge/-täler bzw. Zähne.

28. Flachdichtung nach einem der vorhergehenden Ansprüche,
**dadurch gekennzeichnet, daß** die auf verschiedenen Seiten der Lage angeordneten Wellenberge/- täler bzw. Zähne eine unterschiedliche Formgebung, beispielsweise Höhe, Abstand, Form und dergleichen, und/oder Materialdicke aufweisen.

29. Verfahren zur Herstellung einer Flachdichtung nach einem der vorhergehenden Ansprüche,
**dadurch gekennzeichnet,**
**dass** in mindestens eine metallische Lage (1) zumindest bereichsweise um eine oder mehrere Durchgangsöffnung(en) eine wellen- und/oder sägezahnförmige Profilierung 82) eingeprägt wird.

30. Verfahren nach Anspruch 29,
**dadurch gekennzeichnet, dass** die eingeprägte Profilierung (2) zumindest bereichsweise planiert wird.

31. Verfahren nach Anspruch 30,
**dadurch gekennzeichnet, dass** die metallische Lage (1) beim Planieren verspannt wird.
